(19) Europäisches Patentamt
European Patent Office
Office européen des brevets

(11) Veröffentlichungsnummer : **0 336 103 B1**

# (12) EUROPÄISCHE PATENTSCHRIFT

(45) Veröffentlichungstag der Patentschrift :
**11.12.91 Patentblatt 91/50**

(51) Int. Cl.$^5$ : **F16D 65/02**

(21) Anmeldenummer : **89103377.1**

(22) Anmeldetag : **27.02.89**

(54) **Niederhaltefeder.**

(30) Priorität : **05.04.88 DE 3811385**

(43) Veröffentlichungstag der Anmeldung :
**11.10.89 Patentblatt 89/41**

(45) Bekanntmachung des Hinweises auf die
Patenterteilung :
**11.12.91 Patentblatt 91/50**

(84) Benannte Vertragsstaaten :
**DE ES FR GB IT**

(56) Entgegenhaltungen :
**EP-A- 0 089 750**
**DE-A- 2 223 206**

(56) Entgegenhaltungen :
**DE-A- 2 809 383**
**DE-U- 7 010 120**
**DE-U- 7 837 264**
**FR-A- 2 323 919**

(73) Patentinhaber : **ALFRED TEVES GMBH**
**Guerickestrasse 7**
**W-6000 Frankfurt/Main 90 (DE)**

(72) Erfinder : **Doell, Andreas**
**Saalburgstrasse 16**
**W-6000 Frankfurt/Main (DE)**

(74) Vertreter : **Portwich, Peter**
**c/o ALFRED TEVES GMBH Guerickestrasse 7**
**W-6000 Frankfurt/Main 90 (DE)**

## Beschreibung

Die Erfindung betrifft eine Niederhaltefeder aus Federdraht für die Bremsbacken einer Festsattelteilbelag-Scheibenbremse, bei der die eine Trägerplatte aufweisenden Bremsbacken in einem radial offenen Schacht des Bremsgehäuses in axialer Richtung verschiebbar geführt und in Umfangsrichtung der Bremsscheibe abgestützt sind, mit einem in dem Gehäuse gehaltenen, zur Bremsscheibenachse parallelen Haltestift, der eine Haltebohrung in den Bremsbacken mit Spiel durchgreift und an dem sich die Feder abstützt gemäß dem Oberbegriff des Anspruchs 1.

Eine derartige Niederhaltefeder ist aus der DE-A-2223206 bekannt. Diese Niederhaltefeder weist einen zentralen Abschnitt zur Abstützung am Rand eines Schachtes eines Bremssattels sowie zwei symmetrisch etwa in Umfangsrichtung davon wegragende Schenkel auf, deren mittlere Bereiche sich jeweils auf der radial inneren Seite des benachbarten Haltestiftes und deren axial verlaufende, von der Bremsscheibe weg gerichtete Endbereiche sich jeweils auf der Oberseite eines der Bremsbacken in radialer Richtung federnd vorgespannt abstützen. Die Feder stützt sich an dem Bremssattel, an dem starr mit dem Bremssattel angeordneten Haltestift und an den Bremsbacken ab. Dabei wird ein großer Teil der Auflagekräfte an den starr miteinander verbundenen Bremssattelteilen, nämlich dem Bremssattel selbst und dem Haltestift, aufgewendet.

Aus der Fig. 13 der EP-A-0089750 ist eine rechteckförmige Feder bekannt, die sich an einen mittig gelagerten Haltestift abstützt. Diese Feder ist eine Blechfeder und die Abstützpunkte zwischen Blechfeder, Haltestift, Bremsbacken und Bremssattelgehäuse sind anders gewählt.

Der Erfindung liegt die Aufgabe zugrunde, eine einfach montierbare und verbesserte Drahtfeder anzugeben, die eine günstige Kräfteverteilung zwischen den zwei gegeneinander federnden Teilen aufweist.

Diese Aufgabe wird gemäß den Merkmalen des Anspruchs 1 gelöst. Erfindungsgemäß stützt sich die Feder mit zwei in Umfangsrichtung versetzt angeordneten, im wesentlichen in axialer Richtung verlaufenden ersten Abschnitten die Bremsbacken übergreifend an den Bremsbacken ab und untergreift mit zwei in axialer Richtung versetzt angeordneten, in Umfangsrichtung verlaufenden zweiten Abschnitten den mittig in dem Schacht des Gehäuses angeordneten Haltestift.

In einer einfachen Ausgestaltung liegen die ersten und zweiten Abschnitte paarweise parallel gegenüber und bilden eine Rechteckform.

Vorteilhaft weisen die ersten Abschnitte Schenkel auf, die gegenüber der Bremsscheibenachse unter einem Winkel geneigt sind. Die Schenkel stützen sich an Oberkanten der Trägerplatten ab, die der Bremsscheibe zugewandt sind. Durch die Neigung und der Abstützung werden nach Bremsbetätigungsende und nach Zurückziehen der hydraulisch betätigten Kolben eine Rückstellkraft ausgeübt und die Bremsbacken von der Bremsscheibe abgeklappt und/oder in axialer Richtung von der Bremsscheibe gegen die Kolben bewegt.

Vorteilhaft weisen die zweiten Abschnitte mittlere Segmente auf, die halbkreisförmige Ausformungen bilden. Die halbkreisförmigen Ausformungen um- und untergreifen den Haltestift, zentrieren die Feder in ihrer Lage und bilden Abstützpunkte zwischen Feder und Haltestift.

Eine einfache Ausgestaltung der Drahtfeder sieht vor, die Enden der rechteckförmig gebogenen Feder in den Bereich der halbkreisförmigen Ausformung zu legen, so daß sich jedes der Enden an den Haltestift abstützt und nicht frei endet.

Vorteilhaft sind die Abstützpunkte der Feder auf der Trägerplatte symmetrisch zum Haltestift angeordnet. Damit wird ein gleichmäßiges Wegklappen der Bremsbacke von der Bremsscheibe erzielt.

Durch die Anordnung der Abschnitte zwischen Schachtwand und Trägerplatte wird eine einfache Gestaltung der Feder erzielt. Gleichzeitig wird damit ein kurzer Hebel an den Haltestift zwischen Gehäuse und Feder erzielt.

In einer anderen einfachen Ausgestaltung der Feder ist die Trennstelle, die die Feder aufweist, stumpf verschweißt. Damit ist platzsparend eines der beiden parallel nebeneinanderliegenden Enden der Drahtfeder eingespart.

Eine andere einfache Ausgestaltung sieht vor, daß die Federenden der Feder ineinander verschlungen sind, so daß die Stabilität der Form der Öse erhöht ist, durch welche der Haltestift geführt wird und zur Erleichterung der Montage.

Nachfolgend sind Ausführungsbeispiele der Feder anhand der Zeichnungen näher erläutert.
Es zeigen

Fig. 1      eine rechteckförmige Feder in Draufsicht,
Fig. 2      die Feder mit M-Form in Seitenansicht,
Fig. 3      die Feder mit V-Form in einer weiteren Seitenansicht,
Fig. 4      eine plastische Darstellung der Feder,
Fig. 5      die Feder eingesetzt in einer Faustsattel-Teilbelagscheibenbremse in Draufsicht,

Fig. 6     die Feder eingesetzt in die Faustsattel-Teilbelagscheibenbremse in Seitenansicht,

Fig. 7     eine weitere Feder in der Faustsattel-Teilbelagscheibenbremse in Draufsicht,

Fig. 8     eine dritte Feder in Draufsicht,

Fig. 9     die dritte Feder in Seitenansicht und

Fig. 10     eine Kräfteverteilung zwischen Feder und Bremsbacke.

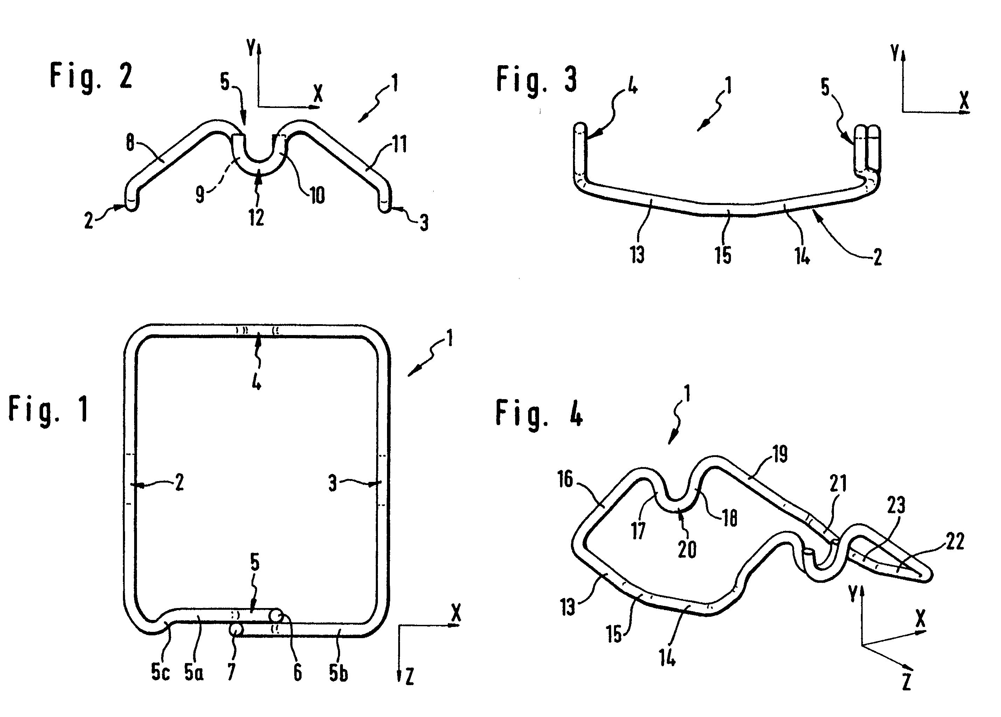

Fig. 1 zeigt eine rechteckförmig gebogene Drahtfeder 1 in einer Ebene mit den Koordinatenachsen x und z. Die Drahtfeder 1 weist rechtwinklig zueinander angeordnete Abschnitte 2 bis 5 und Enden 6, 7 auf. Der Abschnitt 5 weist zwei Endbereiche 5a und 5b auf, die in x-Richtung parallel und in z-Richtung versetzt zueinander angeordnet sind. Aufgrund des Versatzes weist der Endbereich 5a eine z-förmige Kurve 5c auf.

Fig. 2 zeigt die Drahtfeder 1 in einer Seitenansicht und in einer Ebene mit den Koordinatenachsen x und y. Die Drahtfeder weist Segmente 8 bis 11 auf, die M-förmig zueinander angeordnet sind. Die mittleren Segmente 9 und 10 bilden eine halbkreisförmige Ausformung.

Fig. 3 zeigt die Drahtfeder 1 in einer weiteren Seitenansicht und in einer Ebene mit den Koordinaten y und z. Der Abschnitt 2 weist Schenkel 13,14 auf, die eine V-Form zueinander einnehmen. Zwischen den Schenkeln 13,14 ist eine Verlängerung 15 eingefügt, die zu den Abschnitten 4 und 5 einen etwa rechteckförmigen Winkel aufweist.

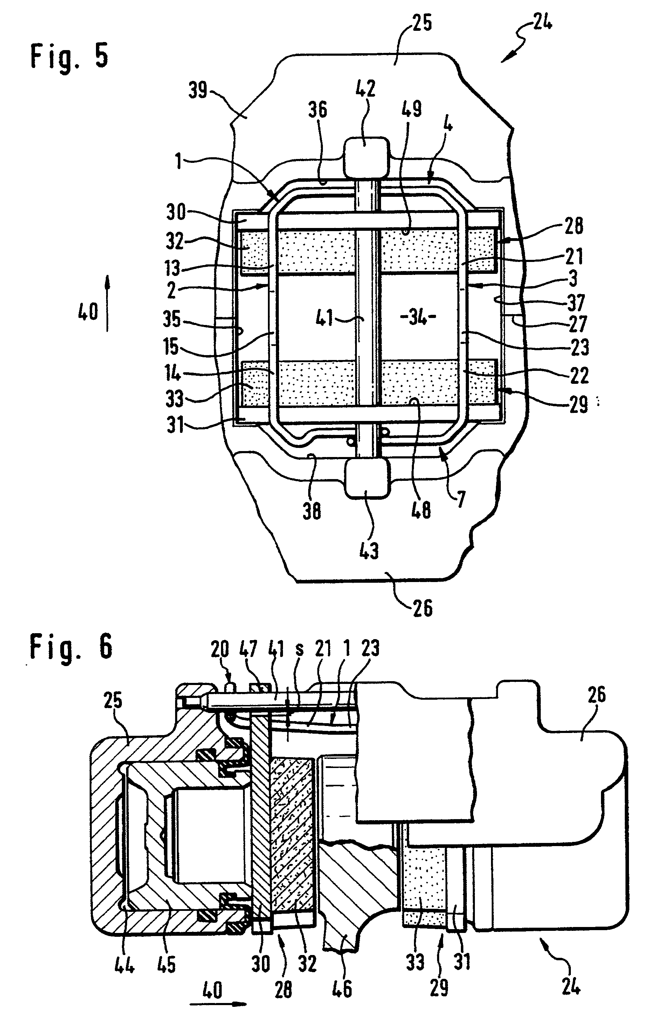

In der Fig. 4 ist die Drahtfeder 1 plastisch im Raum mit allen Koordinatenachsen x, y und z dargestellt. Der Abschnitt 4 gliedert sich in weitere M-förmig zueinander angeordnete Segmente 16 bis 19, wobei die mittleren Segmente 17 und 18 eine weitere Ausformung 20 bilden, Der Abschnitt 3 teilt sich in weitere Schenkel 21, 22 und eine Verlängerung 23. Die Verlängerung 23 liegt zwischen V-förmig zueinander angeordneten Schenkeln 21, 22.

Fig. 5 zeigt die Feder 1 in einer Festsattel-Teilbelagscheibenbremse 24 eingebaut. Die Festsattel-Teilbelagscheibenbremse 24 weist zwei Festsattelhälften 25 und 26 auf, die an einer Nahtstelle 27 zusammenstoßen. Bremsbacken 28 und 29 mit Trägerplatten 30, 31 und Belägen 32, 33 sind in einem radial offenen Schacht 34 des Bremssattels 39, der von den Gehäusen der Festsattelhälften 25, 26 gebildet ist, in axialer Richtung 40 verschiebbar geführt. Der Schacht 34 weist Schachtwände 35-38 auf. Die Bremsbacken 28, 29 stützen sich mit ihren Trägerplatten 30, 32 an den Schachtwänden 35 und 37 in Umfangsrichtung der Bremsscheibe ab. Ein Haltestift 41 ist starr, aber lösbar in Vorsprüngen 42, 43 parallel zur Bremsscheibenachse und mittig zum Schacht 34 angeordnet.

Fig. 6 zeigt die Teilbelagscheibenbremse 24 mit den beiden Sattelhälften 25, 26. Die Sattelhälfte 25 ist geschnitten dargestellt und zeigt in einem Zylinder 44 einen hydraulisch betätigbaren Kolben 45. Zwischen den Bremsbacken 28, 29 ist eine Bremsscheibe 46 angeordnet, deren Achse in Richtung 40 verläuft. Der Haltestift 41 durchgreift Haltebohrungen 47 der Trägerplatten 30, 31 mit einem Spiel S.

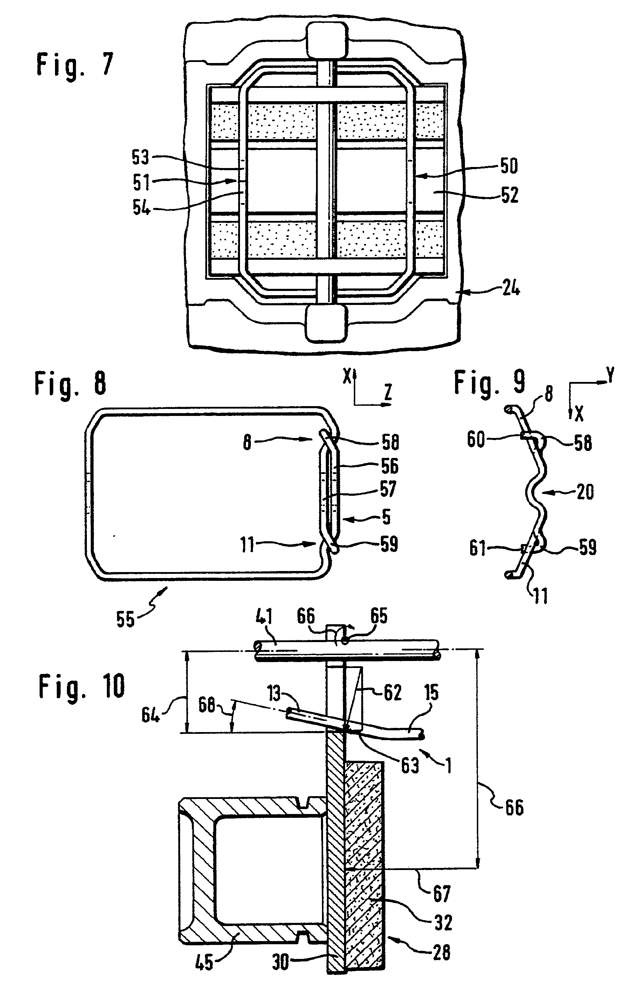

Fig. 7 zeigt eine zweite Feder 50, eingebaut in die Faustsattelteilbelag-Scheibenbremse 24. Die Feder ist auch im Bereich der weiteren Ausformung 20, im folgenden Öse genannt, durchgehend. Eine Trennstelle 51 der Feder 50 liegt über einer Bremsscheibe 52. Drahtenden 53, 54 sind stumpf verschweißt, so daß die Feder 50 komplett eine stabile Einheit bildet.

Fig. 8 zeigt eine dritte Feder 55, deren Federenden 56, 57 zur Erleichterung der Montage ineinander verschlungen sind. Dies erhöht die Stabilität der Form der Öse 20, durch die der Haltestift 41 geführt ist. Der Abschnitt 5 der Feder 55 weist im Bereich der Öse 20 die zwei Federenden 56, 57 auf, die parallel zueinander angeordnet sind und Haken 58, 59 aufweisen. Die Haken 58, 59 greifen über die Segmente 8 und 11. Die Haken 58, 59 und die Segmente 8, 11 sind so schlangenförmig gebogen, daß eine entstehende Breite in z-Richtung im wesentlichen die doppelte Federdicke nicht überschreitet.

Fig. 9 zeigt die Feder 55 in einer Seitenansicht und in einer Ebene mit den Koordinatenachsen x und y. Die Haken 58, 59 übergreifen die Abschnitte 8 und 11 etwa in deren Mitte, weisen mit ihren Enden 60, 61 in bezug zu der Teilbelagscheibenbremse radial nach innen zur Bremsscheibenachse und umgreifen die Abschnitte 8, 11 so, daß die Federwirkung zwischen Haltestift 41 und Bremsbacken 28, 29 die Haken 58, 59 immer in Anlage an den Abschnitten 8, 11 halten.

Fig. 10 zeigt die Kräfteverteilung an der Feder 1, 50, 55. Die Federkraft 62 bzw. die horizontale Kraftkomponente 63 erzeugt über einen Hebelarm 64 am Drehpunkt 65 ein Moment 66, welches die Bremsbacke 28 sauber an den Kolben 45 anlegt. Über den Hebelarm 66 entsteht die Anlegekraft 67 am Kolben 45. Durch die Kolbenbewegung bzw. den Belagverschleiß versucht die Bremsbacke 28 die schiefe Ebene der Feder zu überwinden und verstärkt hierbei die Federkraft. Dieser potentielle Kraftanstieg kompensiert die nachlassende Federsteifigkeit durch die Temperatureinwirkung der Bremsscheibe. Durch die Kolbenbewegung erhöht sich über den Kolbenweg auf jeden Fall die Federkraft entsprechend der steigenden Verformung der Federarme. Während der Kolben bei Druckabfall durch den Dichtring zurückgezogen wird (Roll-back-Effekt), würde der Bremsbelag bei einer normalen Feder weiterhin an der Bremsscheibe anliegen. Durch die Kraft 67 wird sich die Bremsbacke 28 aber entlang der schiefen Ebene zurückschieben bzw. durch das Moment 66 um den Drehpunkt 65 von der Bremsscheibe wegklappen, so daß der Belag 32 freigeht. Zwischen dem Schenkel 13 und der horizontalen Kraftkomponente 63 parallel zur Bremsscheibenachse liegt ein Winkel 68. Die Führungsfeder 1, 50, 55 soll sowohl die Bremsbeläge 28, 29 sicher in ihrer Position halten und somit Klappergeräusche o.ä. verhindern, als auch eine Kraftkomponente für ein verbessertes Lüftspielverhalten erzeugen.

Bisherige Führungsfedern sind überwiegend zweiteilig und aus Blech hergestellt. Neben einer aufwendigen Wärmebehandlung (Glühen, Härten, Anlassen) ist zur Vermeidung von Korrosion eine Oberflächenbeschichtung erforderlich. Weiterhin sind die bisherigen Federn auf die Befestigung an zwei Haltestifte gebunden. Die Fixierung durch zwei Haltestifte ermöglicht zwar hohe Federkräfte, verhindert aber die gleichmäßige Verteilung der Kräfte.

Bedingt durch Fertigungstoleranzen und Montageungenauigkeiten ergeben sich Höhenunterschiede im Bremsbelagpaket, welche somit über die Federarme bisheriger Federn zu unterschiedlichen Kräften auf den Bremsbelag führen. Diese Unterschiede führen zu Differenzkräften im Lüftspielverhalten.

Weiterhin ist einsehbar, daß die Montage einer Feder mit zwei Haltestiften aufwendiger bzw. umständlicher ist, als wenn die Montage einzig mit einem Haltestift erfolgt. Somit werden Kostenproblem, Korrosionsprobleme, Funktionsprobleme und Montageprobleme gelöst.

Im Gegensatz zu den bisherigen Lösunen ist diese Belaghaltefeder einteilig aus rostfreiem Federdraht herstellbar. Durch die einfache Gestaltung ist die Feder fertigungs- und montagefreundlich. Durch die Herstellung aus rostfreiem Federdraht entfällt die Wärmebehandlung und die Oberflächenbeschichtung.

Durch die Beschränkung auf einen Haltestift als Sicherung gegen ein Herausfallen des Belages bei Bruch der Feder können weitere Kosten eingespart werden. Neben dem 2. Haltestift entfallen auch die hierzu erforderlichen Bohrungen im Bremssattelgehäuse.

Durch die besondere Formgebung im Bereich des Bremsbelagverschleißes wird eine zusätzliche Kraftkomponente erzeugt, welche den Bremsbelag sauber gegen die entsprechende Abstützfläche des Bremssattels bzw. bei Festsätteln an den Kolben anlegt. Weiterhin erzwingt die Kraftkomponente ein besseres Lüftverhalten des Bremsbelages.

Durch die Befestigung an einem einzelnen Haltestift kann die Federkraft nach dem Prinzip eines Waagebalkens gleichmäßig auf beide Seiten des Bremsbelages verteilt werden. Differenzkräfte durch Fertigungs- und Montagetoleranzen werden so verhindert.

Zusammenfassung der Vorteile :
— Kosteneinsparung durch Wegfall des 2. Haltestiftes incl. der zugehörigen Bohrungen
— Kosteneinsparung durch einteilige Ausführung
— Kosteneinsparung durch Wegfall von Oberflächenbehandlung
— Kosteneinsparung durch fertigungsfreundliche Verwendung von Federdraht
— ausreichende Federkraftreserve durch große Federlänge
— verbessertes Lüftspielverhalten durch besondere Gestaltung
— verbessertes Anlegeverhalten des Belages durch entsprechende Federgestaltung.


Bezugszeichenliste

| | |
|---|---|
| 1 | Drahtfeder |
| 2 | Abschnitt |
| 3 | Abschnitt |
| 4 | Abschnitt |
| 5 | Abschnitt |
| 5a | Endbereich |
| 5b | Endbereich |
| 5c | Kurve |
| 6 | Ende |
| 7 | Ende |
| 8 | Segment |
| 9 | Segment |
| 10 | Segment |
| 11 | Segment |
| 12 | Ausformung |
| 13 | Schenkel |
| 14 | Schenkel |
| 15 | Verlängerung |

| 16 | Segment |
|----|---------|
| 17 | Segment |
| 18 | Segment |
| 19 | Segment |
| 20 | Ausformung |
| 21 | Schenkel |
| 22 | Schenkel |
| 23 | Verlängerung |
| 24 | Festsattel-Teilbelagscheibenbremse |
| 25 | Festsattelhälfte |
| 26 | Festsattelhälfte |
| 27 | Nahtstelle |
| 28 | Bremsbacke |
| 29 | Bremsbacke |
| 30 | Trägerplatte |
| 31 | Trägerplatte |
| 32 | Belag |
| 33 | Belag |
| 34 | Schacht |
| 35 | Schachtwand |
| 36 | Schachtwand |
| 37 | Schachtwand |
| 38 | Schachtwand |
| 39 | Bremssattel |
| 40 | Richtung |
| 41 | Haltestift |
| 42 | Vorsprung |
| 43 | Vorsprung |
| 44 | Zylinder |
| 45 | Kolben |
| 46 | Bremsscheibe |
| 47 | Haltebohrung |
| 48 | Oberkante |
| 49 | Oberkante |
| 50 | Feder (zweite) |
| 51 | Trennstelle |
| 52 | Bremsscheibe |
| 53 | Drahtende |
| 54 | Drahtende |
| 55 | Feder (dritte) |
| 56 | Federende |
| 57 | Federende |
| 58 | Haken |
| 59 | Haken |
| 60 | Ende |
| 61 | Ende |
| 62 | Federkraft |
| 63 | Kraftkomponente |
| 64 | Hebelarm |
| 65 | Drehpunkt |
| 66 | Hebelarm |
| 67 | Anlegekraft |
| 68 | Winkel |

**Patentansprüche**

1. Niederhaltefeder (1, 50, 55) aus Federdraht für die Bremsbacken (28, 29) einer Festsattelteilbelag-Scheibenbremse, bei der die jeweils eine Trägerplatte (30, 31) aufweisenden Bremsbacken (28, 29) in einem radial offenen Schacht (34) eines Bremsgehäuses in axialer Richtung verschiebbar geführt und in Umfangsrichtung der Bremsscheibe (46) abgestützt sind, mit einem in dem Gehäuse gehaltenen, zur Bremsscheibenachse parallelen Haltestift (41), der eine Haltebohrung (47) in den Bremsbacken (28, 29) mit Spiel durchgreift und an dem sich die Niederhaltefeder abstützt, dadurch **gekennzeichnet,** daß die Niederhaltefeder (1, 50, 55) sich mit zwei in Umfangsrichtung versetzt angeordneten, im wesentlichen in axialer Richtung verlaufenden ersten Abschnitten (2, 3) die Bremsbacken (28, 29) übergreifend an den Bremsbacken (28, 29) abstützt und mit zwei in axialer Richtung versetzt angeordneten, im wesentlichen in Umfangsrichtung verlaufenden zweiten Abschnitten (4, 5) den mittig in dem Schacht des Gehäuses angeordneten Haltestift (41) untergreift.

2. Niederhaltefeder nach Anspruch 1, dadurch **gekennzeichnet,** daß die ersten und zweiten Abschnitte (2-5) paarweise parallel gegenüberliegen.

3. Niederhaltefeder nach Anspruch 1 oder 2, dadurch **gekennzeichnet,** daß die ersten Abschnitte (2, 3) einen Schenkel (13, 14, 21, 22) aufweisen, der gegenüber einer Parallelen der Bremsscheibenachse unter einem Winkel (68) geneigt ist.

4. Neiderhaltefeder nach Anspruch 3, dadurch **gekennzeichnet,** daß sich der Schenkel (13, 14, 20, 21) an einer der Bremsscheibe (46) zugewandten Oberkante (48, 49) der Trägerplatte (30, 31) abstützt.

5. Niederhaltefeder nach einem der vorhergehenden Ansprüche, dadurch **gekennzeichnet,** daß die zweiten Abschnitte (4, 5) mittlere Segmente (9, 10) aufweisen, die sich an dem Haltestift (41) abstützen.

6. Niederhaltefeder nach Anspruch 4, dadurch **gekennzeichnet,** daß die mittleren Segmente (9, 10) Ausformungen (12, 20) bilden.

7. Niederhaltefeder nach Anspruch 5, dadurch gekennzeichnet, daß die Ausformungen (12, 20) halbkreisförmig sind.

8. Niederhaltefeder nach einem der vorhergehenden Ansprüche, dadurch **gekennzeichnet,** daß die Drahtfeder (1) in Höhe des Haltestiftes (41) zwei Enden (6, 7) aufweist, die sich an dem Haltestift (41) abstützen.

9. Niederhaltefeder nach einem der vorhergehenden Ansprüche, dadurch **gekennzeichnet,** daß die Abstützpunkte der Feder (1, 50, 55) auf der Trägerplatte (30, 31) symmetrisch zu dem Haltestift (41) angeordnet sind.

10. Niederhaltefeder nach einem der vorhergehenden Ansprüche, dadurch **gekennzeichnet,** daß die zweiten Abschnitte (4, 5) zwischen einer Schachtwand (36, 38) und einer Trägerplatte (30, 31) angeordnet sind.

11. Niederhaltefeder nach einem der vorhergehenden Ansprüche, dadurch **gekennzeichnet,** daß die Feder (50) eine Trennstelle (51) aufweist, die insbesondere stumpf verschweißt ist.

12. Niederhaltefeder nach einem der vorhergehenden Ansprüche, dadurch **gekennzeichnet,** daß die Feder (55) Federenden (56, 57) aufweist, die ineinander verschlungen sind.

## Claims

1. A holding-down spring (1, 50, 55) of spring wire for the brake shoes (28, 29) of a fixed caliper spot-type disc brake in which the brake shoes (28, 29) furnished each with a carrier plate (30, 31) are slidably guided in axial direction in a radially open guide (34) of a brake housing and are supported in the circumferential direction of the brake disc (46), with a retaining pin (41) secured in the housing and disposed parallel with the axis of the brake disc, said retaining pin penetrating with play through a retaining bore (47) in the brake shoes (28, 29) and giving support to the holding-down spring, **characterized** in that the holding-down spring (1, 50, 55) takes support, through two first sections (2, 3) offset in circumferential direction and extending substantially in axial direction, at the said brake shoes (28, 29) so straddling said brake shoes (28, 29), and, through two second sections (4, 5) offset in axial direction and extending substantially in circumferential direction, reaches beneath the said retaining pin (41) being arranged centrally in the said guide of the said housing.

2. A holding-down spring as claimed in claim 1, **characterized** in that the said first and the said second sections (2 to 5) are opposed to each other in parallel pairs.

3. A holding-down spring as claimed in claim 1 or in claim 2, **characterized** in that the said first sections (2, 3) present a stem (13, 14, 21, 22) which is inclined at an angle (68) relative to a parallel of the axis of the said brake disc.

4. A holding-down spring as claimed in claim 3, **characterized** in that the said stem (13, 14, 20, 21) takes support at an upper edge (48, 49) of the said carrier plate (30, 31) which said upper edge faces the said brake disc (46).

5. A holding-down spring as claimed in anyone of the preceding claims, **characterized** in that the said second sections (4, 5) are formed with central segments (9, 10) which take support at the said retaining pin (41).

6. A holding-down spring as claimed in claim 4, **characterized** in that the said central segments (9, 10) form bulges (12, 20).

7. A holding-down spring as claimed in claim 5, **characterized** in that the said bulges (12, 20) are semicircular in shape.

8. A holding-down spring as claimed in anyone of the preceding claims, **characterized** in that the wire spring (1) is furnished with two ends (6, 7) at the level of the said retaining pin (41) which take support at the said retaining pin (41).

9. A holding-down spring as claimed in anyone of the preceding claims, **characterized** in that the points of support of the said spring (1, 50, 55) on the said carrier plate (30, 31) are disposed symmetrically with respect to the said retaining pin (41).

10. A holding-down spring as claimed in anyone of the preceding claims, **characterized** in that the said second sections (4, 5) are arranged between a guide wall (36, 38) and a said carrier plate (30, 31).

11. A holding-down spring as claimed in anyone of the preceding claims, **characterized** in that the said spring (50) is furnished with a separating point (51) which is preferably butt-welded.

12. A holding-down spring as claimed in anyone of the preceding claims, **characterized** in that the said spring (55) is furnished with spring ends (56, 57) which are wound around each other.


## Revendications

1. Ressort presseur (1, 50, 55) en fil métallique à ressorts, pour les plaquettes de frein (28, 29) d'un frein à disque à garnitures partielles à étrier fixe, dans lequel les plaquettes (28, 29) de frein, qui comportent chacune une plaque support (30, 31) sont guidées mobiles en translation dans la direction axiale et sont en appui dans la direction circonférentielle du disque (46) du frein, dans un puits (34) du corps du frein qui s'ouvre dans la direction radiale, ce frein comportant une broche de retenue (41), fixée dans le corps, parallèle à l'axe du disque du frein, qui traverse avec jeu un perçage de retenue (47) pratiqué dans les plaquettes (28, 29) de frein, et contre laquelle le ressort presseur prend appui, caractérisé en ce que le ressort presseur (1, 50, 55) porte sur les plaquettes de frein (28, 29) par deux premiers tronçons (2, 3) espacés dans la direction circonférentielle, qui s'étendent sensiblement dans la direction axiale, en passant sur les plaquettes (28, 29) de frein, et qu'il est engagé par deux deuxièmes tronçons (4, 5) espacés dans la direction axiale, et s'étendant sensiblement dans la direction circonférentielle sous la broche de retenue (41) disposée en position centrale dans le puits du corps.

2. Ressort presseur selon la revendication 1, caractérisé en ce que les premiers et deuxièmes tronçons (2 à 5) sont disposés face à face et parallèlement par paires.

3. Ressort presseur selon la revendication 1 ou 2, caractérisé en ce que les premiers tronçons (2, 3) comportent une branche (13, 14, 21, 22) qui est inclinée d'un certain angle (68) par rapport à la parallèle à l'axe du disque du frein.

4. Ressort presseur selon la revendication 3, caractérisé en ce que la branche (13, 14, 20, 21) prend appui contre une arête supérieure (48, 49) de la plaque support (30, 31) qui est la plus proche du disque (46) du frein.

5. Ressort presseur selon une des revendications précédentes, caractérisé en ce que les deuxièmes tronçons (4, 5) présentent des segments centraux (9, 10) qui portent contre la broche de retenue (41).

6. Ressort presseur selon la revendication 4, caractérisé en ce que les segments centraux (9, 10) forment des anses (12, 20).

7. Ressort presseur selon la revendication 5, caractérisé en ce que les anses (12, 20) sont de forme semi-circulaire.

8. Ressort presseur selon une des revendications précédentes, caractérisé en ce que le ressort en fil (1) présente à la hauteur de la broche de retenue (41) deux extrémités qui prennent appui contre la broche de retenue (41).

9. Ressort presseur selon une des revendications précédentes, caractérisé en ce que les points d'appui du ressort (1, 50, 55) sur la plaque support (30, 31) sont disposés symétriquement par rapport à la broche de retenue (41).

10. Ressort presseur selon une des revendications précédentes, caractérisé en ce que les deuxièmes tronçons (4, 5) sont disposés entre une paroi (36, 38) du puits et une plaque support (30, 31).

11. Ressort presseur selon une des revendications précédentes, caractérisé en ce que le ressort (10) comporte un raccordement (51) qui est en particulier soudé bout à bout.

12. Ressort presseur selon une des revendications précédentes, caractérisé en ce que le ressort (55) comporte des extrémités de ressort (56, 57) qui sont entrelacées l'une dans l'autre.

Fig. 2

Fig. 3

Fig. 1

Fig. 4

EP 0 336 103 B1

8

## Fig. 5

## Fig. 6

Fig. 7

Fig. 8

Fig. 9

Fig. 10